Europäisches Patentamt

European Patent Office

Office européen des brevets

(11) Veröffentlichungsnummer: **0 119 985**
A1

(12) # EUROPÄISCHE PATENTANMELDUNG

(21) Anmeldenummer: 84890032.0

(22) Anmeldetag: 21.02.84

(51) Int. Cl.³: **C 08 L 95/00**, C 08 J 3/12,
C 04 B 31/40, E 01 C 7/26

(30) Priorität: 22.02.83 AT 609/83

(71) Anmelder: **NOVOPHALT Société Anonyme, 11,
Boulevard du prince Henri P.O. Box 410, Luxemburg (LU)**

(43) Veröffentlichungstag der Anmeldung: 26.09.84
Patentblatt 84/39

(72) Erfinder: **Strommer, Erich, Mattersburgerstrasse 56,
A-7022 Schattendorf (AT)**

(74) Vertreter: **Pawloy, Heinrich, Dr. et al, Riemergasse 14,
A-1010 Wien (AT)**

(84) Benannte Vertragsstaaten: **IT**

(54) Verfahren zur Herstellung eines Kunststoff enthaltenden Pulvers.

(57) Verfahren zur Herstellung eines feinverteilten Pulvers, welches einen thermoplastischen Kunststoff enthält, wobei zur Bildung der kunststoffhaltigen Partikel thermoplastisches Kunststoffmaterial in eine nicht-wässerige Trägersubstanz, welche im Schmelztemperaturbereich des Kunststoffes flüssig ist, eingetragen und im Schmelztemperaturbereich mit der Trägersubstanz gemischt wird und weiter dieser Masse gemahlener Branntkalk zugesetzt wird und danach der Masse ein wässeriger Schlamm zugesetzt wird. Durch die Reaktion zwischen dem Branntkalk und dem wässerigen Schlamm wird die Masse zu einem kunststoffhaltigen Pulver umgesetzt. Als Trägersubstanz ist insbesondere Bitumen in Betracht gezogen. Das Pulver kann vorzugsweise zur Bildung eines Kunststoff enthaltenden bituminösen Bindemittels für Baustoffe eingesetzt werden.

ACTORUM AG

Verfahren zur Herstellung eines
Kunststoff enthaltenden Pulvers

Die Erfindung bezieht sich auf ein Verfahren zur Herstellung eines feinverteilten thermoplastischen Kunststoff enthaltenden Pulvers.

Das mechanische Aufarbeiten von thermoplastischen Kunststoffen, welche in Form von Stücken, Granulat, Schnitzeln, Körnern und dgl. vorliegen, zu einem pulverigen Kunststoffmaterial unter Einsatz entsprechender Zerkleinerungsmaschinen, wie Schneidwerken, Schnitzelwerken und Mühlen, ist in verschiedener Hinsicht kompliziert und aufwendig. Es steigt dabei mit geringer werdender Teilchengröße auch die für weitere Zerteilung einzusetzende Energie stark an, so daß auch bei verhältnismäßig großem Energieeinsatz und der Verwendung leistungsfähiger Maschinen bald nur mehr ein sehr langsamer Fortgang der Verminderung der Teilchengröße erzielt werden kann. All dies ist nachteilig, wenn größere Mengen eines feinteiligen Pulvers aus einem thermoplastischen Kunststoffmaterial, welches in viel gröberer Form vorliegt, hergestellt werden sollen.

Es ist ein Ziel der Erfindung, ein Verfahren eingangs erwähnter Art zu schaffen, mit dem auf verhältnismäßig einfache Weise und mit geringem Aufwand, insbesondere geringem Energieaufwand, ein Pulver, welches feinverteilten thermoplastischen Kunststoff enthält, hergestellt werden kann.

Das erfindungsgemäße Verfahren eingangs erwähnter Art ist dadurch gekennzeichnet, daß thermoplastisches Kunststoffmaterial in eine im Schmelztemperaturbereich des Kunststoffmaterials flüssige nicht-wässerige Trägersubstanz, insbesondere Bitumen, eingetragen und in diesem Schmelztemperaturbereich mit der Trägersubstanz zu einer, mindestens visuell, homogenen Masse gemischt wird, daß dieser Masse gemahlener Branntkalk zugesetzt und in der Masse verteilt wird, daß danach der Masse ein wässeriger Schlamm zugegeben und in der Masse verteilt wird und die Masse durch die dabei entstehende Reaktion zwischen dem Branntkalk und dem wässerigen Schlamm zu einem kunststoffhaltigen Pulver umgesetzt wird.

Durch die erfindungsgemäß vorgesehenen Maßnahmen kann der vorstehend angeführten Zielsetzung sehr gut entsprochen werden und man erhält auf einfache Weise mit einem verhältnismäßig schnellen Verfahrensablauf ein Pulver, welches thermoplastischen Kunststoff in sehr feinteiliger Form enthält. Es kann dabei mit geringem apparativen Aufwand und mit geringem Energieaufwand gearbeitet werden.

Es ist bei diesem Verfahren für das Eintragen des Kunststoffmaterials in die Trägersubstanz vorteilhaft, wenn man die Trägersubstanz vor dem Eintragen des Kunststoffmaterials auf eine im Schmelztemperaturbereich des Kunststoffmaterials liegende Temperatur erhitzt. Es kann auf diese Weise das Vermischen des Kunststoffmaterials mit der Trägersubstanz rasch und problemlos abgewickelt werden und es kann die erforderliche Erhitzung des Kunststoffmaterials in den Schmelztemperaturbereich auf diese Weise in sehr kurzer Zeit bewältigt werden. Es ist dabei auch ohne weiteres möglich, das Kunststoffmaterial mit Umgebungstemperatur in die Trägersubstanz einzutragen, was von der Manipulation her günstig ist und eine an sich eher schwierige Erwärmung des Kunststoffausgangsmaterials entbehrlich macht.

Für eine möglichst einfach durchführbare Homogenisierung der die Trägersubstanz und das Kunststoffmaterial enthaltenden Masse ist es günstig, wenn das Masseverhältnis Trägersubstanz zu Kunststoffmaterial zwischen 1 : 5 bis 10 : 1 gewählt wird.

Im Interesse eines möglichst raschen und einfachen Verfahrensablaufes kommt auch einem leichten Einmischen des Branntkalkes in die die Trägersubstanz und das Kunststoffmaterial enthaltende Masse große Bedeutung zu und es ist im Sinne einer einfachen und raschen Durchführung dieses Verfahrensschrittes vorteilhaft, wenn man vorsieht, daß der aus der Trägersubstanz und dem Kunststoffmaterial bestehenden Masse oder der Trägersubstanz vor der Zugabe des Kunststoffmaterials ein mit der Trägersubstanz bzw. der Masse eine Lösung bildendes Öl oder organisches Lösungsmittel, dessen Siedetemperatur um 10 bis 20°C niedriger als die Zersetzungstemperatur des jeweils eingesetzten Kunststoffmaterials liegt, zugesetzt wird.

Bei Verwendung von Polyäthylen als Kunststoffmaterial und Bitumen als Trägermaterial ist es dabei weiter günstig, wenn ein Masseverhältnis Öl bzw. Lösungsmittel zu Trägersubstanz mit Kunststoffmaterial von ca. 4 : 1 gewählt wird.

Ist das Vorhandensein des bei der letzterwähnten Ausführungsform des erfindungsgemäßen Verfahrens zugesetzten Öles oder Lösungsmittels mit der späteren Verwendung des herzustellenden Pulvers verträglich, kann dieses Öl oder Lösungsmittel in der Reaktionsmasse belassen werden. In der Regel ist es aber vorzuziehen, das Öl bzw. Lösungsmittel aus der Masse oder aus dem hergestellten feinverteilten Kunststoff enthaltenden Pulver zu entfernen, wofür sich insbesondere dann, wenn ein organisches Lösungsmittel zugesetzt wurde, ein thermisches Austreiben, insbesondere Abdestillieren, als günstige Vorgangsweise empfiehlt. Ein solchen Austreiben oder Abdestillieren kann dabei vorteilhaft unter Ausnutzung der bei der Reaktion des Branntkalkes mit dem wässerigen Schlamm entstehenden Wärme bzw. der durch diese bewirkten Aufheizung der Masse ausgeführt werden; das abdestillierte Lösungsmittel wird zweckmäßig im Kreislauf geführt, um das Verfahren besonders wirtschaftlich zu machen.

- 4 -

Als Lösungsmittel sind bei der Pulverisierung von Polyäthylen insbesondere Dekalin und Tetralin vorteilhaft einsetzbar.

Im Hinblick auf eine gute Effektivität der Pulverbildungsreaktion und im Hinblick auf das Erzielen geringer Partikelgrößen der Pulverbestandteile ist es günstig, wenn beim erfindungsgemäßen Verfahren ein auf eine Korngröße unter 0,1 mm gemahlener Branntkalk eingesetzt wird. Im Interesse einer raschen Pulverbildungsreaktion und einer guten Zerteilungswirkung für die Kunststoffpartikel ist es dabei weiter vorteilhaft, wenn hochreaktiver, weichgebrannter Branntkalk eingesetzt wird. Weiter ist es günstig, wenn das Masseverhältnis der die Trägersubstanz und das Kunststoffmaterial enthaltenden, ohne Öl bzw. Lösungsmittel gerechneten Masse zu Branntkalk zwischen 1 : 2,5 und 1 : 3,5, vorzugsweise 1 : 2,8 bis 1 : 3, gewählt wird.

Für die Manipulation bei der Zugabe des wässerigen Schlammes und für das Verhalten der Reaktionspartner bei der Zugabe des wässerigen Schlammes sowie in Blickrichtung auf eine exakte Dosierung der mit dem wässerigen Schlamm eingetragenen, zur Reaktion mit dem Branntkalk vorgesehenen Wassermenge ist es vorteilhaft, wenn die Masse vor der Zugabe des wässerigen Schlammes auf eine bei etwa 100°C liegende Temperatur abgekühlt wird.

Weil der Feststoff des wässerigen Schlammes im Endprodukt des Verfahrens verbleibt, ist es für die weitere Verarbeitung des Endproduktes in der Regel günstig, wenn ein als Feststoff ein anorganisches Material enthaltender wässeriger Schlamm eingesetzt wird. Es kommt dabei in erster Linie darauf an, daß der das Reaktionswasser für die Reaktion mit dem Branntkalk enthaltende Feststoff des wässerigen Schlammes eine hinreichend große Porosität aufweist, und bei der späteren Verwendung des kunststoffhaltigen Pulvers nicht störend in Erscheinung tritt; es kommen dabei praktisch z.B. neben Gesteinsmehlen auch Flugaschen und Bleicherden als Feststoff für den wässerigen Schlamm in Frage.

Eine besonders vorteilhafte Ausführungsform des erfindungsgemäßen Verfahrens sieht hinsichtlich des wässerigen Schlammes den Einsatz von Rotschlamm, der als Abfallprodukt bei der Aluminiumerzeugung anfällt, vor. Ein solcher Rotschlamm ist günstig erhältlich und fällt bereits im wassergesättigten Zustand an, so daß er nicht mehr weiter aufbereitet werden muß, und weist auch eine verhältnismäßig hohe Porosität auf, so daß mit einer verhältnismäßig geringen Schlammenge das für die Reaktion mit dem Branntkalk benötigte Reaktionswasser geliefert werden kann.

Für die pulverbildende Reaktion selbst ist es vorteilhaft, wenn man vorsieht, daß die eingesetzte Schlammenge so gewählt wird, daß das Verhältnis der Masse des im Schlamm enthaltenen Wassers zur Masse des Branntkalkes zwischen 1 : 1,8 und 1 : 2, vorzugsweise bei 1 : 1,9, liegt.

Für das Anspringen und den Verlauf der pulverbildenden Reaktion ist es günstig, wenn der wässerige Schlamm, ehe er der das Kunststoffmaterial, die Trägersubstanz und den Branntkalk enthaltenden Masse zugesetzt wird, auf eine über 75°C, vorzugsweise auf eine bei etwa 90°C, liegende Temperatur erwärmt wird.

Um den Zeitpunkt des Einsatzes der Reaktion des mit dem wässerigen Schlamm in die Masse eingetragenen Wassers mit dem in der Masse vorliegenden Branntkalk möglichst gut kontrollieren zu können und einen vorzeitigen Beginn dieser Reaktion, der den Ablauf des Einbringens des wässerigen Schlammes in die Reaktionsmasse stören könnte, möglichst auszuschalten, geht man vorteilhaft so vor, daß der wässerige Schlamm zunächst auf die Oberfläche der Masse aufgebracht und über diese verteilt und dann rasch in die Masse eingerührt wird.

Das erfindungsgemäße Verfahren bietet besondere Vorteile für das Herstellen von Pulvern, welche als Kunststoff Polyolefine, insbesondere Polyäthylen, enthalten.

Hinsichtlich des Prozeßablaufes ist der Einsatz des beim erfindungsgemäßen Verfahren als Trägersubstanz bevorzugt vorgesehenen Bitumer. sehr günstig. Es kommen aber auch andere Stoffe als Trägersubstanz in Frage, wie z.B. Hartparaffin, Fette und Wachse, wenn die Eigenschaften des Bitumens, das ja auch im fertigen Pulver vorliegt, beim späteren Einsatz des Pulvers störend in Erscheinung treten würden.

Das erfindungsgemäße Verfahren zur Herstellung eines fein verteilten thermoplastischen Kunststoff enthaltenden Pulvers wird nun an Hand von Beispielen weiter erläutert.

B e i s p i e l  A: Es wurden 10 Masseteile Bitumen in einem beheizbaren Gefäß auf eine Temperatur von etwa 200°C erhitzt und es wurden in diese so aufgeschmolzene dünnflüssige Bitumenmasse 20 Masseteile grob zerteilter Polyäthylenabfälle eingebracht und das so erhaltene Gemenge durch Umrühren gemischt, bis eine visuell homogene Masse vorlag. Auf diese Weise wurde eine leicht pastöse helle Schmelze erhalten. Diese Schmelze wurde durch Zugabe von 40 Masseteilen Dekalin verdünnt. In die so erhaltene, nunmehr relativ dünnflüssige Masse wurden 84 Masseteile fein gemahlener Branntkalk mit einer unter 0,1 mm liegenden Teilchengröße eingerührt. Es wurde dabei ein hoch reaktiver Weichbrand-Branntkalk verwendet. Nachdem der Branntkalk in der Masse eingerührt und gleichmäßig verteilt war, wurde die Masse auf eine Temperatur von ca. 100°C abgekühlt. Diese Masse wurde dann mit 100 Masseteilen Rotschlamm, der ein Abfallprodukt der Aluminiumerzeugung darstellt und einen Wassergehalt von ca. 40 bis 50 %-Masse aufweist, versetzt, wobei dieser Rotschlamm zunächst auf 90°C vorgewärmt wurde, dann auf die Oberfläche der die Trägersubstanz, das Kunststoffmaterial und den Branntkalk enthaltenden Masse aufgebracht und über die Oberfläche verteilt wurde und danach durch schnelles und intensives Rühren mit dieser Masse vermengt wurde. Es wurde so ein schlagartiger Einsatz der Reaktion des im Rotschlamm enthaltenen Wassers mit dem in der Masse vorhandenen Branntkalk erzielt. Bei dieser Reaktion wurde der Branntkalk mit dem Reaktionswasser zu Kalziumhydroxid umgesetzt und es wurde durch diese Reaktion aus der gesamten Masse ein feines rieselfähiges Pulver gebildet.

B e i s p i e l  B: Es wurde analog wie in Beispiel A vorgegangen und zunächst 20 Masseteile Bitumen auf etwa 200°C erhitzt. In diese heiße Bitumenmasse wurden 50 Masseteile Polyäthylen in zerteilter Form eingetragen und es wurde das Gemisch bis zur visuellen Homogenität gemischt. Darauf wurden 100 Masseteile Dekalin zugegeben und danach wurden 210 Masseteile Branntkalk eingerührt und es wurde die Masse danach auf eine Temperatur von etwa 100°C abgekühlt. Diese Masse wurde dann mit einem zuvor aus 180 Masseteilen Flugasche und 90 Masseteilen Wasser gebildeten Gemisch versetzt, welches zunächst vorsichtig auf die Bitumen-Kunststoff-Kalk-Masse geschichtet und dann rasch eingerührt wurde. Bei der darauf eingetretenen Reaktion wurde aus der gesamten Masse ein feines rieselfähiges Pulver gebildet.

Die Erfindung bezieht sich weiter auf ein Verfahren zur Herstellung eines bituminös gebundenen Baustoffes, insbesondere Straßenbaustoffes, der einen korn-gestuften, aus Füller, Sand und Splitt bzw. Kies bestehenden Zuschlag und ein Bindemittel enthält und dessen Bindemittel mit thermoplastischem Kunststoff, insbesondere einem Polyolefin, wie Polyäthylen, versetzt ist.

Dieses erfindungsgemäße Verfahren ist dadurch gekennzeichnet, daß der Kunststoff in Form feinteiliger Partikel, welche mit einem in Teilchengröße einem Füller entsprechenden anorganischen Material vermischt oder an diese Teilchen ange-

- 8 -

lagert sind, zugegeben wird, wobei der Kunststoff vorzugsweise in Form eines durch ein wie vorerwähnt erläutertes
erfindungsgemäßes Verfahren erhaltenen, Kunststoff enthaltenden Pulvers zugesetzt wird.

Es kann mit diesem Verfahren der zur Modifizierung der Bindemitteleigenschaften des Bitumens vorgesehene Kunststoff
auf einfache Weise ohne Zuhilfenahme spezieller Einrichtungen in den Baustoff eingebracht werden und dabei eine, bezogen auf die eingesetzte Kunststoffmenge, sehr wirksame
Modifikation des Bindemittels erzielt werden. Es können
durch diese erfindungsgemäße Vorgangsweise auch Nachteile,
die bei bekannten Techniken zur Kunststoffvergütung von
als Bindemittel verwendetem Bitumen auftreten, wie z.B. Entmischungserscheinungen des Stoffpaares Bitumen-Kunststoff,
praktisch ausgeschaltet werden.

Besonders vorteilhaft ist dabei eine Ausführungsform des
erfindungsgemäßen Verfahrens, welche dadurch gekennzeichnet ist, daß der Kunststoff im Zuge des Mischvorganges, bei
dem der Zuschlag mit dem Bitumen zum Baustoff vereinigt wird,
zugegeben wird. Man kann dabei vorteilhaft das den Kunststoff enthaltende Pulver mit jener Technik in das aus einem
bituminösen Bindemittel und dem Zuschlag bestehende Mischgut einbringen, die üblicherweise für die Zugabe des sogenannten Füllers eingesetzt wird.

Sowohl im Interesse der Erzielung einer möglichst gleichmäßigen Verteilung des Kunststoffes im Bitumen als auch im
Interesse einer guten Ausnützung der Modifizierungsfähigkeit des Kunststoffes für das Bitumen ist es günstig, wenn
man vorsieht, daß Kunststoff mit einer Teilchengröße von
weniger als 0,09 mm eingesetzt wird. Weiter ist es für das
Einbringen von Polyäthylen als Kunststoff in das Bindemittel des bituminös gebundenen Baustoffes vorteilhaft, wenn
man vorsieht, daß ein Verhältnis der Masse des Kunststoffes
zur Masse des anorganischen Materials, mit dem der Kunststoff vermischt oder an das er angelagert ist, von etwa
1 : 7,5 vorgesehen wird.

Es wird nun das erfindungsgemäße Verfahren zur Herstellung
bituminös gebundener Baustoffe an Hand weiterer Beispiele
weiter erläutert.

B e i s p i e l s g r u p p e  2:

Zur Herstellung bituminös gebundener Straßenbaustoffe wurde
Gesteins- bzw. Sandmaterial mit einer für Asphaltbeton 0/18
genormten Sieblinie in auf ca. 170 bis 180°C vorgewärmtem
Zustand in einen Asphaltmischer gegeben und Bitumen B100,
welches gleichfalls eine Temperatur von ca. 170 bis 180°C
hatte, in den Mischer eingedüst. Desgleichen wurde in den
Mischer Kalksteinmehl als Füller und weiter auch noch kunststoffhaltiges Pulver, welches zuvor nach Beispiel A oder
Beispiel B hergestellt worden war, gefüllt. Es wurden nacheinander mehrere, zum Einsatz als Straßenbaustoff vorgesehene Massen hergestellt, die sich hinsichtlich der Menge des
Zusatzes an kunststoffhaltigem Pulver voneinander unterschieden. Die auf die Gesamtmenge der Baustoffmasse bezogene Menge des Bindemittels, zu dem das Bitumen B100 und der
Kunststoffanteil des kunststoffhaltigen Pulvers zu rechnen
ist, wurde bei allen Massen auf 5,1 %-Masse konstant gehalten.

Weiter wurde bei allen Massen die gleiche Menge und Zusammensetzung des Zuschlages (Gesteins- bzw. Sandmaterial, Füller) vorgesehen und die gleiche (normgemäß vorgesehene) Menge an Füller zugegeben, wobei auch der mineralische Anteil
des kunststoffhaltigen Pulvers zum Füller gerechnet wurde
und auch der Bitumenanteil des kunststoffhaltigen Pulvers
durch entsprechende Verminderung des zur Bildung des jeweiligen Bindemittels eingesetzten Bitumens berücksichtigt
wurde.

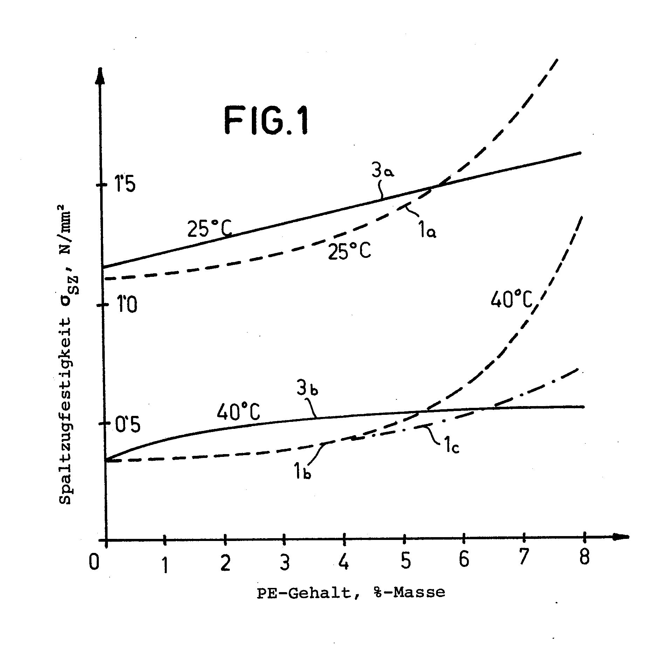

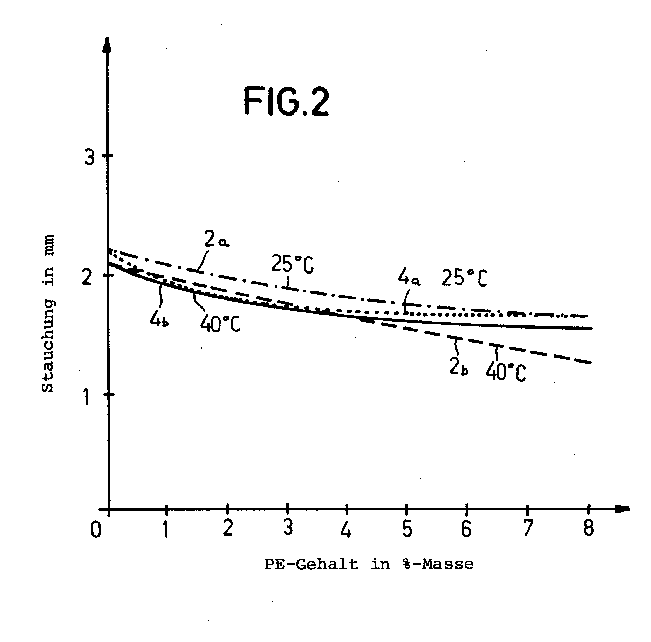

Aus den nach innigem Durchmischen der vorgenannten Komponenten im Asphaltmischer erhaltenen Massen wurden in normgemäßer Vorgangsweise Marshall-Körper hergestellt und diese wurden danach in üblicher Technik geprüft, wobei insbesondere die Spaltzugfestigkeit und die Stauchung bestimmt wurden. Diese Prüfungen wurden bei Prüftemperaturen von 25°C und von 40°C durchgeführt. Die dabei von einer Reihe von Massen mit voneinander verschiedenem Kunststoffgehalt im Bindemittel erhaltenen Meßergebnisse sind in den in Fig. 1 und 2 enthaltenen Diagrammen dargestellt. Die Kurven 1a, 1b, 2a und 2b beziehen sich auf ein Material, das mit nach Beispiel A erhaltenem Kunststoffpulver hergestellt worden ist, die Kurve 1c auf ein Material, das mit nach Beispiel B erhaltenem Kunststoffpulver hergestellt worden ist.

Wie aus diesen Diagrammen ersichtlich ist, nimmt die durch die Kurven 1a, 1b und 1c dargestellte Spaltzugfestigkeit mit zunehmendem Polyäthylengehalt progressiv zu. Eine durchgeführte Korrelationsrechnung zeigte, daß sich die Abhängigkeit der Spaltzugfestigkeit vom Polyäthylengehalt durch eine Wachstumsfunktion (Exponentialfunktion mit positiver Hochzahl vom Typ: $y = a + b \cdot e^{cx}$) beschreiben läßt.

Bei dem durch die Kurve 1a ausgedrückten Verhalten bei 25°C liegen tendenziell die gleichen Verhältnisse vor wie bei dem durch die Kurven 1b und 1c ausgedrückten Verhalten bei 40°C.

Die durch die Kurven 2a und 2b dargestellte Stauchung der untersuchten Marshall-Körper nimmt, wie diesen Kurven entnehmbar ist, mit steigendem Polyäthylengehalt degressiv ab. Der Zusammenhang läßt sich durch eine fallende Sättigungsfunktion (Exponentialfunktion mit negativem Exponentialglied und negativer Hochzahl $y = a - b \cdot e^{-cx}$) beschreiben. Der verhältnismäßig flache Verlauf der die Stauchung darstellenden Kurven läßt erkennen, daß die Stauchung der Marshall-Körper nur in geringem Umfang vom Polyäthylengehalt des Bindemittels beeinflußt ist, was anzeigt, daß das Verformungsvermögen

- 11 -

des Asphalts durch den Kunststoffgehalt nicht in unerwünschtem Maß herabgesetzt wird und daß durch den Kunststoff keine Erhöhung der Rißgefahr eintritt. Materialien, die unter Einsatz von nach Beispiel B erhaltenem Kunststoffpulver hergestellt worden sind, zeigen bei der Untersuchung der Stauchung ein korrespondierendes Verhalten.

Der aus den an den Marshall-Körpern vorgenommenen Untersuchungen errechenbare Elastizitätsmodul hat einen mit zunehmendem Polyäthylengehalt progressiv zunehmenden Verlauf und dieser kann durch eine Wachstumsfunktion beschrieben werden.

B e i s p i e l s g r u p p e  3 - Vergleichsversuche

Es wurde analog Beispielsgruppe 2 vorgegangen und unter Einsatz des gleichen Gesteins- bzw. Sandmaterials und des gleichen Kalksteinmehls als Füller eine Anzahl bituminös gebundener Massen, die zum Einsatz als Straßenbaustoff vorgesehen waren, hergestellt. Die Mengenverhältnisse des Gesteins- bzw. Sandmaterials und des Füllers wurden gleich wie bei Beispielsgruppe 2 vorgesehen. Als Bindemittel wurde jedoch reines Bitumen B100 und Bitumen B100, welches bereits durch Zusatz von Polyäthylen modifiziert war, zum Einsatz gebracht. Die Bindemittelmenge wurde bei allen Mischungen dieser Beispielsgruppe analog zu den Mischungen der Beispielsgruppe 2 mit 5,1 %-Masse, bezogen auf die Gesamtmenge der jeweils hergestellten Baustoffmasse, konstant gehalten.

Mehrere kunststoffmodifizierte Bitumina mit verschiedenen Gehalten an Polyäthylen waren zuvor durch intensives homogenisierendes Durcharbeiten eines jeweils entsprechend zusammengesetzten Gemisches aus Bitumen B100 und zerkleinertem Polyäthylen bei einer Temperatur von 270°C hergestellt worden. Aus jedem dieser kunststoffmodifizierten Bitumina und aus dem reinen Bitumen B100 wurde zusammen mit dem vorgenannten Gesteins- bzw. Sandmaterial und dem Füller eine zum Einsatz als Straßenbaumaterial vorgesehene Masse hergestellt und es wurden aus diesen Massen wieder in normgemäßer Vor-

- 12 -

gangsweise Marshall-Körper angefertigt und analog Beispielsgruppe 2 geprüft. Auch die dabei erhaltenen Meßergebnisse sind in den in Fig. 1 und 2 enthaltenen Diagrammen dargestellt.

Analog wie bei den gemäß Beispielsgruppe 2 hergestellten Straßenbaustoffen liegt auch bei den nach Beispielsgruppe 3 zum Vergleich hergestellten Straßenbaustoffen, wie aus den die Spaltzugfestigkeit dieser Straßenbaustoffe darstellenden Kurven 3a und 3b ersichtlich ist, eine mit zunehmendem Polyäthylengehalt zunehmende Spaltzugfestigkeit vor, wobei sich im betrachteten Bereich die Abhängigkeit der Spaltzugfestigkeit vom Polyäthylengehalt durch eine steigende Sättigungsfunktion beschreiben läßt. Desgleichen nimmt die Stauchung der gemäß Beispielsgruppe 3 hergestellten Straßenbaustoffe, wie aus den die Stauchung darstellenden Kurven 4a und 4b ersichtlich ist, ähnlich wie die Stauchung der Straßenbaustoffe nach Beispielsgruppe 2 mit zunehmendem Polyäthylengehalt langsam ab.

Aus dem Vergleich der an erfindungsgemäßen, nach Beispielsgruppe 2 hergestellten Baustoffen festgestellten Werte mit korrespondierenden Werten, die an nach Beispielsgruppe 3 hergestellten Baustoffen festgestellt worden sind, ergibt sich, daß bis zu einem für den jeweils vorliegenden Fall geltenden und durch die Materialkomponenten (Gestein, Füller, Bitumen, Kunststoff) bestimmten Kunststoffgehalt die mit der erfindungsgemäßen Pulvertechnik hergestellten Baustoffe ähnliche Kennwerte (z.B. Spaltzugfestigkeit) haben, wie Baustoffe, die bei im wesentlichen gleicher Gesamt-Zu-sammensetzung unter Verwendung kunststoffmodifizierten Bi-tumens hergestellt wurden, daß aber oberhalb dieses bestimmten Kunststoffgehaltes die Kennwerte, insbesondere die Spaltzugfestigkeit, der durch die erfindungsgemäße Pulvertechnik hergestellten Baustoffe bei weitem höher liegen als die Kennwerte der unter Verwendung kunststoff-modifizierten Bitumens hergestellten Baustoffe.

P A T E N T A N S P R Ü C H E :

1.      Verfahren zur Herstellung eines feinverteilten thermoplastischen Kunststoff enthaltenden Pulvers, dadurch gekennzeichnet, daß thermoplastisches Kunststoffmaterial in eine im Schmelztemperaturbereich des Kunststoffmaterials flüssige, nicht-wässerige Trägersubstanz, insbesondere Bitumen, eingetragen und in diesem Schmelztemperaturbereich mit der Trägersubstanz zu einer, mindestens visuell, homogenen Masse gemischt wird, daß dieser Masse gemahlener Branntkalk zugesetzt und in der Masse verteilt wird, daß danach der Masse ein wässeriger Schlamm zugegeben und in der Masse verteilt wird und die Masse durch die dabei entstehende Reaktion zwischen dem Branntkalk und dem wässerigen Schlamm zu einem kunststoffhaltigen Pulver umgesetzt wird.

2.      Verfahren nach Anspruch 1, dadurch gekennzeichnet, daß die Trägersubstanz vor dem Eintragen des Kunststoffmaterials auf eine im Schmelztemperaturbereich des Kunststoffmaterials liegende Temperatur erhitzt wird.

3.      Verfahren nach Anspruch 1 oder 2, dadurch gekennzeichnet, daß das Kunststoffmaterial mit Umgebungstemperatur in die Trägersubstanz eingetragen wird.

4.      Verfahren nach einem der Ansprüche 1 bis 3, dadurch gekennzeichnet, daß das Masseverhältnis Trägersubstanz zu Kunststoffmaterial zwischen 1 : 5 bis 10 : 1 gewählt wird.

5.      Verfahren nach einem der Ansprüche 1 bis 4, dadurch gekennzeichnet, daß der aus der Trägersubstanz und dem Kunststoffmaterial bestehenden Masse oder der Trägersubstanz vor der Zugabe des Kunststoffmaterials ein mit der Trägersubstanz bzw. der Masse eine Lösung bildendes Öl oder organisches Lösungsmittel, dessen Siedetemperatur um 10 bis 20°C niedriger als die Zersetzungstemperatur des jeweils eingesetzten Kunststoffmaterial liegt, zugesetzt wird.

6.        Verfahren nach Anspruch 5, dadurch gekennzeichnet, daß ein Masseverhältnis von Öl bzw. Lösungsmittel zu Bitumen als Trägersubstanz mit Polyäthylen als Kunststoffmaterial von ca. 4 : 1 gewählt wird.

7.        Verfahren nach Anspruch 5 oder 6, dadurch gekennzeichnet, daß das Öl bzw. Lösungsmittel während und/oder nach der Reaktion des Branntkalkes mit dem zugegebenen wässerigen Schlamm aus der Masse ausgetrieben, insbesondere abdestilliert, wird.

8.        Verfahren nach einem der Ansprüche 5 bis 7, dadurch gekennzeichnet, daß bei Einsatz von Polyäthylen als Kunststoffmaterial als organisches Lösungsmittel Dekalin oder Tetralin eingesetzt wird.

9.        Verfahren nach einem der Ansprüche 1 bis 8, dadurch gekennzeichnet, daß auf eine Korngröße unter 0,1 mm gemahlener Branntkalk eingesetzt wird.

10.       Verfahren nach einem der Ansprüche 1 bis 9, dadurch gekennzeichnet, daß hochreaktiver weich gebrannter Branntkalk eingesetzt wird.

11.       Verfahren nach einem der Ansprüche 1 bis 10, dadurch gekennzeichnet, daß das Masseverhältnis der die Trägersubstanz und das Kunststoffmaterial enthaltenden Masse zum Branntkalk, berechnet ohne Lösungsmittel, zwischen 1 : 2,5 und 1 : 3,5, vorzugsweise 1 : 2,8 bis 1 : 3, gewählt wird.

12.       Verfahren nach einem der Ansprüche 1 bis 11, dadurch gekennzeichnet, daß die Masse vor der Zugabe des wässerigen Schlammes auf eine bei etwa 100°C liegende Temperatur abgekühlt wird.

13.       Verfahren nach einem der Ansprüche 1 bis 12, dadurch gekennzeichnet, daß ein als Feststoff anorganisches Material enthaltender wässeriger Schlamm eingesetzt wird.

14.       Verfahren nach Anspruch 13, dadurch gekennzeichnet, daß als wässeriger Schlamm Rotschlamm aus der Aluminiumerzeugung eingesetzt wird.

15.       Verfahren nach Anspruch 13, dadurch gekennzeichnet, daß als wässeriger Schlamm mit Wasser versetzte Flugasche eingesetzt wird.

16.       Verfahren nach einem der Ansprüche 1 bis 15, dadurch gekennzeichnet, daß die eingesetzte Schlammenge so gewählt wird, daß das Verhältnis der Masse des im Schlamm enthaltenen Wassers zur Masse des Branntkalkes zwischen 1 : 1,8 und 1 : 2, vorzugsweise bei 1 : 1,9, liegt.

17.       Verfahren nach einem der Ansprüche 1 bis 16, dadurch gekennzeichnet, daß der wässerige Schlamm, ehe er der das Kunststoffmaterial, die Trägersubstanz und den Branntkalk enthaltenden Masse zugesetzt wird, auf eine über 75°C, vorzugsweise auf eine bei etwa 90°C liegende Temperatur erwärmt wird.

18.       Verfahren nach einem der Ansprüche 1 bis 17, dadurch gekennzeichnet, daß der wässerige Schlamm zunächst auf die Oberfläche der Masse aufgebracht und über diese verteilt und dann rasch in die Masse eingerührt wird.

19.       Verfahren nach einem der Ansprüche 1 bis 18, dadurch gekennzeichnet, daß als thermoplastisches Kunststoffmaterial ein Polyolefin eingesetzt wird.

20.       Verfahren nach Anspruch 19, dadurch gekenn-

- 16 -

zeichnet, daß Polyäthylen eingesetzt wird.

21. Verfahren nach einem der Ansprüche 1 bis 20, dadurch gekennzeichnet, daß als Trägersubstanz Hartparaffin eingesetzt wird.

22. Verfahren nach einem der Ansprüche 1 bis 20, dadurch gekennzeichnet, daß als Trägersubstanz ein Fett eingesetzt wird.

23. Verfahren nach einem der Ansprüche 1 bis 20, dadurch gekennzeichnet, daß als Trägersubstanz ein Wachs eingesetzt wird.

24. Verfahren zur Herstellung eines bituminös gebundenen Baustoffes, insbesondere Straßenbaustoffes, der einen korngestuften, aus Füller, Sand und Splitt bzw. Kies bestehenden Zuschlag und ein Bindemittel enthält und dessen Bindemittel mit thermoplastischem Kunststoff, insbesondere einem Polyolefin, wie Polyäthylen, versetzt ist, dadurch gekennzeichnet, daß der Kunststoff in Form feinteiliger Partikel, welche mit einem in Teilchengröße einem Füller entsprechenden anorganischen Material vermischt oder an diese Teilchen angelagert sind, zugegeben wird, wobei der Kunststoff vorzugsweise in Form eines durch ein Verfahren nach einem der Ansprüche 1 bis 23 erhaltenen, Kunststoff enthaltenden Pulvers zugesetzt wird.

25. Verfahren nach Anspruch 24, dadurch gekennzeichnet, daß der Kunststoff im Zuge des Mischvorganges, bei dem der Zuschlag mit dem Bitumen zum Baustoff vereinigt wird, zugegeben wird.

26. Verfahren nach Anspruch 24 oder 25, dadurch gekennzeichnet, daß Kunststoff mit einer Teilchengröße von weniger als 0,09 mm eingesetzt wird.

- 17 -

27.    Verfahren nach einem der Ansprüche 24 bis 26, dadurch gekennzeichnet, daß ein Verhältnis der Masse des Kunststoffes zur Masse des anorganischen Materials, mit dem der Kunststoff vermischt oder an das er angelagert ist, von ca. 1 : 7,5 vorgesehen wird.

FIG.1

FIG.2

**Europäisches Patentamt**

# EUROPÄISCHER RECHERCHENBERICHT

EP 84 89 0032

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-2 146 915 (PAUL HABERL) <br> * Seite 11, Ansprüche 1,2,8; Seite 10, Zeilen 25-29 * | 1,24 | C 08 L 95/00 <br> C 08 J 3/12 <br> C 04 B 31/40 <br> E 01 C 7/26 |
| | --- | | |
| A | FR-A-1 125 472 (UNITED STATES RUBBER) <br> * Seite 5, Zusammenfassung; Seite 1, linke Spalte, Zeilen 1-5; Seite 1, rechte Spalte, Zeilen 19-30 * | 1,24 | |
| | --- | | |
| A | DE-A-1 805 829 (VEREINIGTE ALUMINIUM WERKE) <br> * Seite 6, Ansprüche 1,2,4 * | 1,13, 14 | |
| | ----- | | |

| RECHERCHIERTE SACHGEBIETE (Int. Cl. ³) |
|---|
| C 08 L <br> C 08 J <br> C 04 B |

Der vorliegende Recherchenbericht wurde für alle Patentansprüche erstellt.

| Recherchenort <br> DEN HAAG | Abschlußdatum der Recherche <br> 17-05-1984 | Prüfer <br> GIRARD Y.A. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
.................................................
& : Mitglied der gleichen Patentfamilie, übereinstimmendes Dokument

EPA Form 1503. 03.82